# FASCICULE DE BREVET EUROPEEN

(11) **EP 3 080 475 B1**
(45) Date de publication et mention de la délivrance du brevet: **11.11.2020**
(21) Numéro de dépôt: 14821798.7
(22) Date de dépôt: 04.12.2014
(51) Int. Cl.: F16D 65/09

(54) **FREIN À TAMBOUR MUNI D'UN ORGANE DE RETENUE D'UN SEGMENT DE FREINAGE**
TROMMELBREMSE MIT BREMSBACKENHALTER
DRUM BRAKE PROVIDED WITH A MEMBER FOR HOLDING A BRAKE SEGMENT

(30) Priorité: 09.12.2013 FR 1362316
(43) Date de publication de la demande: 19.10.2016
(73) Titulaire: Chassis Brakes International B.V., 5656 AG Eindhoven (NL)
(72) Inventeur: DUPAS, Christophe, F-91120 Palaiseau (FR); TISSIER, Grégory, F-75011 Paris (FR); GUIGNON, Cédric, F-94510 LA QUEUE EN BRIE (FR)
(74) Mandataire: Potdevin, Emmanuel Eric
(86) Numéro de dépôt international: PCT/FR2014/053161
(87) Numéro de publication internationale: WO 2015/086958

(56) Documents cités:
- EP-A1- 2 080 924
- EP-A2- 1 136 717
- DE-U1- 9 300 423
- DE-U1- 29 721 366
- US-A- 3 556 263
- US-A- 3 998 303
- US-A- 5 368 139

## Description

Frein à tambour muni d'un organe de retenue d'un segment de freinage L'invention se rapporte aux freins à tambour pour véhicules. On trouve souvent ces freins montés sur des véhicules légers, comme des motocyclettes ou des voitures citadines. Ce type de frein est également fréquemment utilisé en tant que frein de parking.

Un frein à tambour comporte principalement un plateau portant le cylindre récepteur du système de commande de freinage, deux segments portant une garniture de freinage et un tambour monté mobile à rotation par rapport au plateau. Le tambour est solidaire en rotation du moyeu d'une roue du véhicule. Lorsque l'utilisateur appuie sur la pédale de frein, les segments, actionnés par un circuit électrique ou hydraulique, s'écartent et viennent positionner la garniture de freinage sur une surface interne du tambour. Par friction, l'énergie cinétique du tambour lié au moyeu est transformée en énergie thermique, diminuant ainsi la vitesse du véhicule, éventuellement jusqu'à l'arrêt.

Actuellement, le segment portant la garniture de freinage est maintenu en position à l'égard de son déplacement dans une direction perpendiculaire au plateau par un ressort.

Néanmoins, en cas de choc sur une roue, notamment latéral, ou d'usage du frein, soit à plusieurs reprises dans un court intervalle de temps, soit lorsque le véhicule est sur un chemin pentu, le segment peut être déplacé par rapport au plateau sur une grande amplitude. Ainsi, le segment n'est plus positionné sur son emplacement habituel, au risque que le système de freinage du véhicule ne fonctionne plus correctement, ce qui est problématique pour la sécurité du conducteur et des passagers.

Un but de l'invention est d'améliorer le maintien en position du segment par rapport au plateau, notamment au moment du freinage.

Pour ce faire, on prévoit un frein à tambour de véhicule qui comporte un plateau, au moins un segment comportant une âme et une garniture de freinage, un ressort susceptible de maintenir l'âme du segment dans une position d'équilibre axial, des moyens de précontrainte du ressort, lesdits moyens de précontrainte du ressort comportant des moyens de butée limitant les possibilités de déplacement axial de l'âme du segment. Les documents US 3998303A et DE9300423U décrivent des moyens de précontrainte du ressort conventionnel, sans jupe axiale.

Les moyens de butées retiennent ainsi le segment lorsque celui-ci s'éloigne du plateau. Ils préservent donc le bon positionnement du segment dans le frein pour que celui-ci fonctionne correctement même dans les conditions particulières décrites précédemment. Ils évitent en outre de comprimer exagérément le ressort, évitant ainsi de déformer celui-ci plastiquement et donc de façon irréversible.

Selon un mode de réalisation, lesdits moyens de butée comprennent une jupe axiale.

Une telle jupe est un moyen de butée pratique et économique.

Avantageusement, lesdits moyens de butée comprennent une rondelle rigidement fixée à la jupe.

La rondelle permet de maintenir la jupe en position.

De préférence, la jupe et la rondelle forment une pièce unique.

Les moyens de butée sont alors peu encombrants.

Selon un mode de réalisation, le moyen de précontrainte comprend un clou ancré au plateau par une première extrémité dont une seconde extrémité définit une position de fin de course de la rondelle.

On définit ainsi une position infranchissable de fin de course.

Avantageusement, la rondelle et une extrémité du clou présentent des formes complémentaires.

En cas de déplacement important du segment par rapport au plateau, la rondelle subit donc des contraintes mécaniques mieux réparties.

De préférence, le clou s'étend selon un axe principal de la jupe.

Les moyens de butée sont alors également peu encombrants.

Selon un mode de réalisation, la jupe entoure le ressort.

Le ressort est alors protégé.

Avantageusement, la jupe présente une ouverture à une de ses extrémités opposée à la rondelle.

Cet agencement réduit l'encombrement des moyens de butée.

De préférence, les moyens de butée et les moyens de précontrainte sont réalisés en tôle d'acier emboutie et/ou pliée.

Ces matériaux sont légers, économiques et résistants.

On va maintenant décrire un mode de réalisation de l'invention en se référant aux figures suivantes :
- la figure 1 est une vue en perspective d'un frein à tambour selon un mode de réalisation de l'invention,
- la figure 2 est une vue en perspective d'un organe de retenue d'un segment par rapport à un plateau dans ce frein,
- les figures 3 à 6 sont des vues respectivement de dessus et de côté de l'organe, et
- les figures 7 et 8 sont des vues en section d'une partie du frein, montrant deux étapes du fonctionnement.

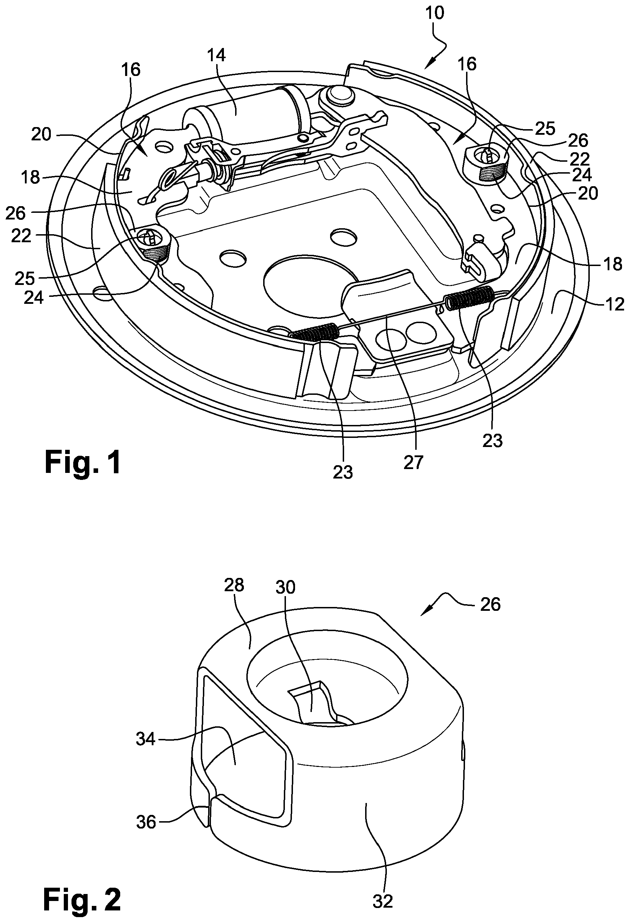

On a représenté à la figure 1 un frein à tambour 10 selon un mode de réalisation de l'invention. Le frein comporte un plateau 12, de forme circulaire, servant de support à d'autres pièces du frein. Le plateau 12 porte un cylindre de roue 14, commandé par le système de contrôle du frein. Il s'agit ici d'un système de contrôle hydraulique. Néanmoins, l'invention est également adaptable à un système de contrôle électronique ou mécanique.

Le plateau 12 porte également deux segments 16, symétriques l'un de l'autre par rapport à un plan médian du plateau 12. Chaque segment 16 se compose d'une âme 18 et d'une jante 20. L'âme 18 est plate, parallèle au plateau, et articulée au cylindre 14. La jante 20 est courbe et perpendiculaire au plateau. Elle porte une garniture de freinage 22, produite à partir d'un matériau de friction La garniture 22 a la même forme courbe que la jante 20 qui la porte.

En outre, les deux segments 16 sont maintenus entre eux notamment par un ressort de maintien 23 ayant un axe parallèle au plateau 12. Lorsqu'un utilisateur relâche la pédale de frein, les ressorts 23 rappellent les segments 16 d'une position où ils appliquent la garniture de freinage 22 sur le tambour vers la position illustrée à la figure 1 où ils en sont distants et ne freinent pas le véhicule.

L'âme 18 de segment 16 est maintenue en position suivant la direction axiale perpendiculaire au plateau 12 au moyen d'un ressort 24, d'un clou de précontrainte 25 et d'un organe 26 représentés aux figures 2 à 6.

L'organe 26 comprend une rondelle 28 présentant une dépression en son centre munie d'une ouverture centrale 30 de forme sensiblement rectangulaire reprenant avantageusement la forme d'une calotte d'un frein. L'organe 26 comprend également des moyens de butée axiale tels qu'une jupe cylindrique 32 munie de deux ouvertures latérales 34 sensiblement rectangulaires et disposées symétriquement l'une de l'autre par rapport à un axe central de l'organe. La jupe est rigidement fixée à la rondelle 28 et d'une seule pièce avec celle-ci. La jupe comprend en outre deux minces ouvertures 36, longilignes, s'étendant selon une direction parallèle à l'axe central de la jupe. Chaque ouverture est positionnée sur une face respective de la jupe portant également une ouverture latérale 34. L'organe 26 est avantageusement réalisé en tôle d'acier emboutie et/ou pliée. Comme illustré aux figures 1, 7 et 8, le ressort 24 est positionné au sein de l'organe 26, entouré par la jupe 32 et surplombé par la rondelle 28. L'axe central du ressort coïncide avec celui de l'organe 26. Le ressort 24 est en appui contre l'âme 18 et contre la rondelle 28 par ses extrémités respectives.

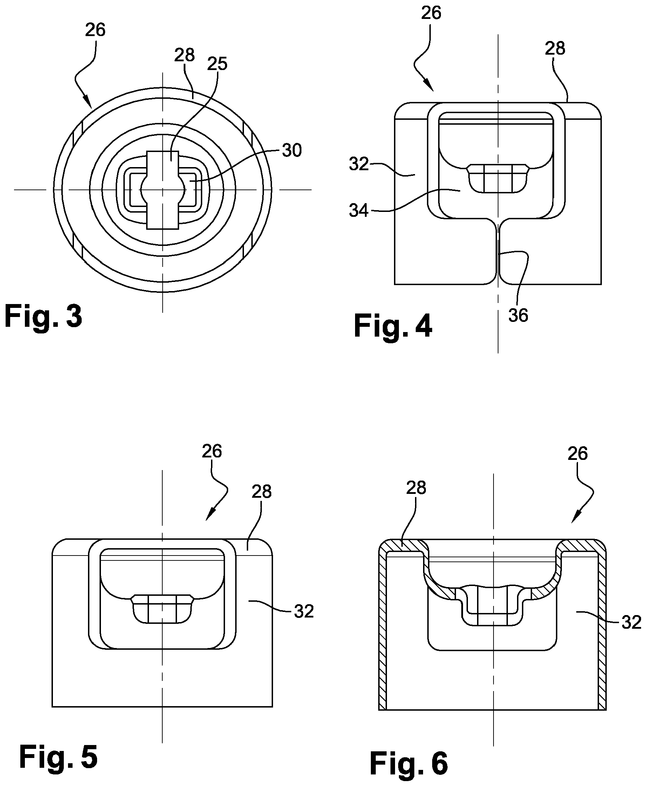

Un clou 25 s'étend selon l'axe central du ressort 24 et de l'organe 26. Comme le montrent les figures 3, 7 et 8, une extrémité de la tige présente une tête à section rectangulaire pouvant passer à travers l'ouverture 30 et ayant sensiblement les mêmes dimensions que cette dernière. Ainsi, pour immobiliser la tige 25 le long de l'axe principal de l'organe avec sa tête au-delà de la rondelle, on fait passer la tête du clou à travers l'ouverture, puis on fait tourner le clou d'un quart de tour autour de l'axe principal de la jupe, comme illustré à la figure 3.

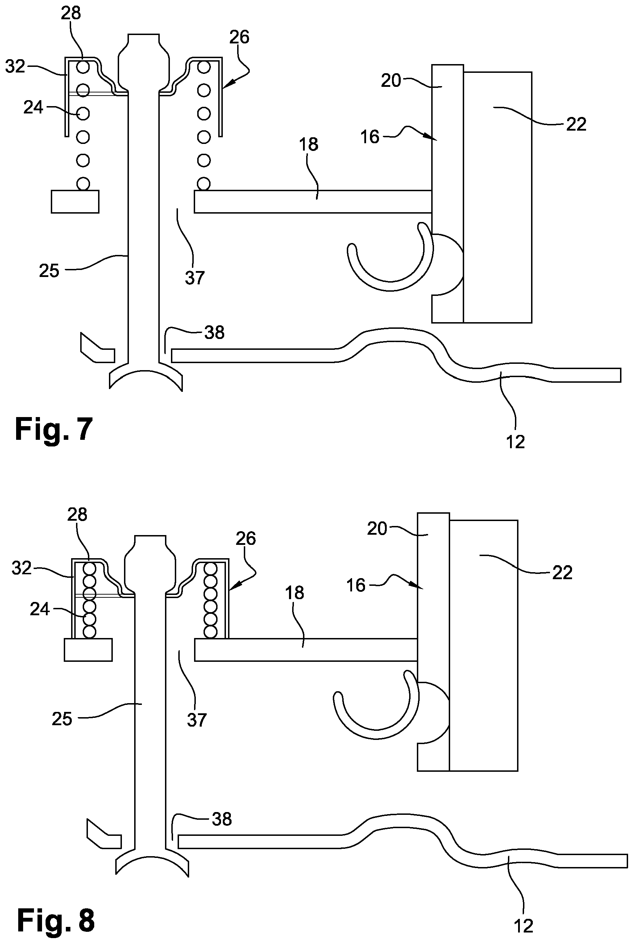

En outre, comme représenté aux figures 7 et 8, l'âme 18 du segment 16 présente une ouverture 37 à travers laquelle s'étend clou 25. Cette dernière est reliée au plateau 12 en traversant une ouverture 38 située sur le plateau 12. Cette ouverture est d'un diamètre inférieur à celui d'une extrémité du clou 25. Ainsi, cette extrémité du clou ne peut pas s'échapper de l'ouverture 38 du plateau 12.

On va maintenant décrire, en référence aux figures 7 et 8, le fonctionnement du mécanisme de maintien du segment 16 au moyen de l'ensemble constitué du ressort 24, du clou 25, et de l'organe 26.

En conditions normales d'utilisation, le segment 16 est en contact avec le plateau 12 et à une distance D comprise entre 0 et 5 mm de préférence, entre 0,5 et 4 mm, de manière encore préférée entre 1 et 3 mm, typiquement égale à 1, 2 ou 3 mm d'une extrémité disposée en vis-à-vis de la jupe 32. Comme le montre la figure 7, la jupe 32 de l'organe 26 n'est pas en appui contre l'âme 18 du segment 16 et se trouve à distance de cette dernière. Le ressort 24 est dans sa position de repos.

En cas de choc latéral subie par la roue portant le frein 10, ou d'application brutale et répétée du frein à main alors que le véhicule est en mouvement le segment 16 est amené à se déplacer en direction normale au plateau, en translation vers l'organe 26 comme illustré à la figure 8. L'âme 18 vient alors en butée contre une extrémité de la jupe 32. Ainsi, la longueur de la jupe selon son axe principal définit une position de fin de course pour le segment 16. Cette position est choisie pour protéger le système de freinage. En effet, dans la position illustrée à la figure 8, une extrémité du segment 16 dite bec de segment est toujours en contact avec le piston correspondant du cylindre de roue 14 l'empêchant ainsi de s'échapper lors d'une application hydraulique.

En outre, le ressort 24 est alors dans une position comprimée. Ensuite, lorsque l'utilisateur cesse toute application hydraulique et/ou mécanique il repousse l'âme 18 dans sa position initiale illustrée à la figure 7.

Bien entendu, on pourra apporter à l'invention de nombreuses modifications sans sortir du cadre de celle-ci.

### Nomenclature :

10 : frein à tambour
12 : plateau
14 : cylindre de roue
16 : segment
18 : âme
20 : jante
22 : garniture de freinage
23 : ressort de maintien
24 : ressort
25 : clou de précontrainte
26 : organe
28 : rondelle
30 : ouverture centrale
32 : jupe cylindrique
34 : ouverture latérale
36 : ouverture longiligne
38 : ouverture du plateau

## Revendications

1. Frein à tambour (10) **caractérisé en ce qu'**il comporte un plateau (12), au moins un segment comportant une âme (18) et une garniture de freinage (22), un ressort (24) susceptible de maintenir l'âme (18) du segment (16) dans une position d'équilibre axial et des moyens (28) de précontrainte du ressort (24), lesdits moyens de précontrainte (26) du ressort comportant des moyens de butée (32) limitant les possibilités de déplacement axial de l'âme (18) du segment (16), lesdits moyens de butée (32) comprenant une jupe axiale.

2. Frein selon la revendication précédente, dans lequel lesdits moyens de butée comprennent une rondelle (28) rigidement fixée à la jupe (32).

3. Frein selon la revendication précédente, dans lequel la jupe (32) et la rondelle (28) forment une pièce unique.

4. Frein selon au moins l'une quelconque des revendications 2 et 3, dans lequel le moyen de précontrainte (26) comprend un clou (25) ancré au plateau (12) par une première extrémité dont une seconde extrémité définit une position de fin de course de la rondelle (28).

5. Frein selon la revendication précédente, dans lequel la rondelle (28) et une extrémité du clou (25) présentent des formes complémentaires.

6. Frein selon au moins l'une quelconque des revendications 4 et 5, dans lequel le clou (25) s'étend selon un axe principal de la jupe (32).

7. Frein selon au moins l'une quelconque des revendications précédentes, dans lequel la jupe (32) entoure le ressort (24).

8. Frein selon au moins l'une quelconque des revendications 2 à 7, dans lequel la jupe (32) présente une ouverture (36) à une de ses extrémités opposée à la rondelle (28).

9. Frein selon au moins l'une quelconque des revendications précédentes, dans lequel les moyens de butée (32) et les moyens de précontrainte sont réalisés en tôle d'acier emboutie et/ou pliée.

## Patentansprüche

1. Trommelbremse (10) für Fahrzeuge **dadurch gekennzeichnet, dass** sie eine Platte (12), mindestens ein Segment mit einem Steg (18) und einem Bremsbelag (22), eine Feder (24), die den Steg (18) des Segments (16) in einer axial stabilen Position hält, Vorrichtungen (28) für die Vorspannung der Feder (24) aufweist, **dadurch gekennzeichnet, dass** die Vorspannvorrichtungen (26) Widerlagervorrichtungen (32) aufweisen, die die axiale Verschiebung des Stegs (18) des Segments (16) begrenzen, **dadurch gekennzeichnet, dass** die Widerlagervorrichtungen (32) einen axialen Mantel aufweisen.

2. Bremse nach Anspruch 1, **dadurch gekennzeichnet, dass** die Widerlagervorrichtungen eine fest mit dem Mantel (32) verbundene Scheibe (28) enthalten.

3. Bremse nach Anspruch 2, **dadurch gekennzeichnet, dass** die Widerlagervorrichtungen (32) und die Scheibe (28) aus einem Teil bestehen.

4. Bremse nach Anspruch 2 oder 3, **dadurch gekennzeichnet, dass** die Vorspannvorrichtungen (26) einen Stift (25) enthalten, dessen erstes Ende in der Platte (12) verankert ist und dessen zweites Ende ein Ende des Laufwegs der Scheibe (28) bestimmt.

5. Bremse nach Anspruch 4, **dadurch gekennzeichnet, dass** die Scheibe (28) und ein Ende des Stifts (25) komplementäre Formen aufweisen.

6. Bremse nach Anspruch 4 oder 5, **dadurch gekennzeichnet, dass** der Stift (25) sich entlang einer Hauptachse des Mantels (32) erstreckt.

7. Bremse nach einem der Ansprüche 1 bis 6, **dadurch gekennzeichnet, dass** der Mantel (32) die Feder (24) umgibt.

8. Bremse nach einem der Ansprüche 2 bis 7, **dadurch gekennzeichnet, dass** der Mantel (32) an einem seiner Enden gegenüber der Scheibe (28) eine Öffnung (36) aufweist.

9. Bremse nach einem der Ansprüche 1 bis 8, **dadurch gekennzeichnet, dass** die Widerlagervorrichtungen (32) und die Vorspannvorrichtungen aus tiefgezogenem und/oder gefalztem Stahlblech sind.

## Claims

1. A drum brake (10) **characterized in that** it comprises a plate (12), at least one segment comprising a core (18) and a brake lining (22), a spring (24) able to keep the core (18) of the segment (16) in an axially balanced position, means (28) for prestressing the spring (24), said means (26) for prestressing the spring comprising stop means (32) limiting the ability of the core (18) of the segment (16) to move axially, said stop means (32) including an axial skirt.

2. The brake as claimed in the preceding claim, wherein said stop means include a washer (28) rigidly attached to the skirt (32).

3. The brake as claimed in the preceding claim, wherein the skirt (32) and the washer (28) form a single part.

4. The brake as claimed in at least one of claims 2 and 3, wherein the prestressing means (26) include a stud (25) anchored to the plate (12) by a first extremity, a second extremity of which defines an end-of-travel position for the washer (28).

5. The brake as claimed in the preceding claim, wherein the washer (28) and one extremity of the stud (25) have matching shapes.

6. The brake as claimed in either one of claims 4 or 5, wherein the stud (25) extends along a main axis of the skirt (32).

7. The brake as claimed in any one of the preceding claims, wherein the skirt (32) surrounds the spring (24).

8. The brake as claimed in any one of claims 2 to 7, wherein the skirt (32) has an opening (36) at one of the extremities opposite to the washer (28).

9. The brake as claimed in any one of the preceding claims, wherein the stop means (32) and the prestressing means are made of folded and/or stamped steel sheet.
